# EUROPÄISCHE PATENTSCHRIFT

(11) **EP 2 914 872 B1**
(45) Veröffentlichungstag und Bekanntmachung des Hinweises auf die Patenterteilung: **28.03.2018**
(21) Anmeldenummer: 13771142.0
(22) Anmeldetag: 01.10.2013
(51) Int. Cl.: F16H 3/00, F16H 3/097, F16H 37/04, B60K 6/48, B60W 10/113, B60W 10/111, F16H 3/093

(54) **DOPPELKUPPLUNGSGETRIEBE IN VORGELEGEBAUWEISE**
DUAL CLUTCH GEARBOX WITH COUNTERSHAFT DESIGN
BOITE DE VITESSES A DOUBLE EMBRAYAGE ET A ARBRE DE RENVOI

(30) Priorität: 05.11.2012 DE 102012220063
(43) Veröffentlichungstag der Anmeldung: 09.09.2015
(73) Patentinhaber: ZF Friedrichshafen AG, 88046 Friedrichshafen (DE)
(72) Erfinder: LUEBKE, Eckhardt, 88048 Friedrichshafen (DE); KALTENBACH, Johannes, 88048 Friedrichshafen (DE)
(86) Internationale Anmeldenummer: PCT/EP2013/070388
(87) Internationale Veröffentlichungsnummer: WO 2014/067734

(56) Entgegenhaltungen:
- EP-A1- 2 123 941
- WO-A1-2011/069526
- DE-A1-102007 047 671
- DE-A1-102010 041 410

## Beschreibung

Die vorliegende Erfindung betrifft ein Doppelkupplungsgetriebe in Vorgelegebauweise.

Im Wesentlichen besteht ein Doppelkupplungsgetriebe aus zwei Strängen bzw. Teilgetrieben mit verschiedenen Zahnradpaaren, zwei Lastschaltkupplungen, die jeweils einem Teilgetriebe zugeordnet sind, einer Antriebswelle und einer Abtriebswelle sowie je nach Gangzahl aus formschlüssigen, unsynchronisierten Schaltkupplungen. Hierbei sind die Gänge abwechselnd in den zwei Teilgetrieben angeordnet, so dass es möglich ist, einen Gang im lastfreien Teilgetriebe vorzuwählen, während das Drehmoment vom anderen Teilgetriebe übertragen wird.

Eine Gangschaltung wird realisiert, indem das zu übertragende Drehmoment von der einen Lastschaltkupplung an die andere übergeben wird, so dass die Gänge lastfrei und ohne Zugkraftunterbrechung sowie ohne Verspannung der schaltbaren Gänge geschaltet werden können. In der Regel sind mit einem Teilgetriebe die ungeraden Gänge und mit dem anderen Teilgetriebe die geraden Gänge und der Rückwärtsgang schaltbar.

Die Vorteile der Doppelkupplungsgetriebe bestehen in einem Wirkungsgradvorteil gegenüber Getrieben in Planetenbauweise, einer freieren Übersetzungswahl der Gänge durch die Teilgetriebe, der Hochdrehzahltauglichkeit und in einem sportlichen Fahrverhalten.

Aus dem Stand der Technik sind Doppelkupplungsgetriebe in koaxialer Ausführung, umfassend ein Hauptgetriebe und ein nachgeschaltetes Gruppengetriebe bekannt, wobei in der Regel Schaltungen über einen Gruppenwechsel nicht lastschaltbar sind. In nachteiliger Weise dauert eine nicht lastschaltbar ausgeführte Schaltung mit Gruppenwechsel lang, da eine Umschaltung im Gruppengetriebe und eine Schaltung im Hauptgetriebe durchgeführt werden müssen, was in einer langen Zugkraftunterbrechung resultiert.

Aus der DE 10 2005 044 068 A1 geht ein lastschaltbares Gruppengetriebe mit einer Doppelkupplung hervor, welches eine Splitgruppe, einen Direktgang, eine Hauptgruppe und eine auf einer Vorgelegewelle angeordnete Hohlwelle aufweist. Hierbei kann zwischen Gängen, die durch einen Wechsel der Eingangskonstanten innerhalb der Splitgruppe des Getriebes zustande kommen, ohne dass sich die Übersetzungsstufe in der Hauptgruppe ändert, zugkraftunterbrechungsfrei geschaltet werden. Ferner kann zwischen zwei benachbarten Gängen, die durch eine Übersetzungsänderung innerhalb der Hauptgruppe zustande kommen, zugkraftunterbrechungsfrei geschaltet werden. Bei dem bekannten Getriebe ist ein Leistungspfad von der ersten Einzelkupplung der Doppelkupplung über einen Direktgang auf eine Hauptwelle führbar, wobei die beiden dem Direktgang unmittelbar benachbarten Vorwärtsgänge über die zweite Einzelkupplung der Doppelkupplung und die Vorgelegewelle verlaufen und wobei die konzentrisch zu der Vorgelegewelle angeordnete Hohlwelle mindestens zwei Zahnräder trägt, von denen das eine Zahnrad der zweiten Eingangskonstante zugehörig ist, wobei ein der Doppelkupplung am nächsten stehendes Zahnrad der ersten Eingangskonstanten zugehörig ist. Ferner verläuft der Leistungspfad eines Vorwärtsganges von der zweiten Einzelkupplung über die erste Eingangskonstante, die zweite Eingangskonstante und die mit einem weiteren Zahnrad der zweiten Eingangskonstante drehfest gekoppelte Hauptwelle.

Aus der DE 10 2010 041 410 A1 der Anmelderin ist ein Doppelkupplungsgetriebe bekannt, umfassend zwei Kupplungen, deren Eingangsseiten mit einer Antriebswelle und deren Ausgangsseiten mit jeweils einer von zwei koaxial zueinander angeordneten Getriebeeingangswellen verbunden sind, mit zumindest zwei koaxial zueinander angeordneten Vorgelegewellen und mit einer zur Antriebswelle koaxial angeordneten Abtriebswelle, wobei mehrere Radebenen vorgesehen sind, denen mehrere Schaltelemente zum Schalten von Losrädern und/oder Wellenverbindungen zugeordnet sind, so dass mehrere Vorwärtsgänge schaltbar sind, wobei die Anzahl der lastschaltbaren Vorwärtsgänge die Anzahl der Radebenen um zumindest zwei übersteigt.

Aus der WO/2011/069526 ist ein Doppelkupplungsgetriebe bekannt, umfassend ein Hauptgetriebe und ein nachgeschaltetes Gruppengetriebe, bei dem in einem Gang das Hauptgetriebe die Leistung von einer Eingangswelle auf die Hauptwelle überträgt, wobei das Gruppengetriebe auf low geschaltet ist. Hierbei wird dieser Gang über die Gruppengetriebeübersetzung realisiert. Beim nächsthöheren Gang ist das Gruppengetriebe nicht in den Leistungsfluss geschaltet und kann somit auf high geschaltet werden, so dass der Übergang zu den weiteren höheren Gängen lastschaltbar ist.

Aus der Schrift DE 10 2007 047 671 A1 ist eine Doppelkupplungsgetriebevorrichtung mit einer Hauptgruppe und einer Nachschaltgruppe bekannt. Die Doppelkupplungsgetriebevorrichtung umfasst eine Kopplungsvorrichtung, die dazu vorgesehen ist, ein Hauptgruppengetriebeelement der Hauptgruppe mit einem Nachschaltgruppengetriebeelement der Nachschaltgruppe zu koppeln.

Der vorliegenden Erfindung liegt die Aufgabe zugrunde, ein Doppelkupplungsgetriebe mit einem Hauptgetriebe und einem nachgeschalteten Gruppengetriebe anzugeben, welches einen geringen konstruktiven Aufwand erfordert und eine geringe Anzahl an Radebenen aufweist, bei dem sämtliche Gänge inklusive der Gruppenschaltung lastschaltbar sind.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein Doppelkupplungsgetriebe in Vorgelegebauweise vorgeschlagen, umfassend ein Hauptgetriebe und ein dem Hauptgetriebe nachgeschaltetes Gruppengetriebe, wobei das Hauptgetriebe eine mit der Abtriebsseite einer ersten Lastschaltkupplung verbundene, als Vollwelle ausgeführte erste Getriebeeingangswelle, die einem ersten Teilgetriebe zugeordnet ist und eine mit der Abtriebsseite einer zweiten Lastschaltkupplung verbundene, als Hohlwelle ausgeführte zweite Getriebeeingangswelle, durch die die erste Getriebeeingangswelle geführt ist und einem zweiten Teilgetriebe zugeordnet ist, zwei koaxial zueinander angeordnete Vorgelegewellen, wobei die erste Vorgelegewelle als Hohlwelle ausgeführt und die zweite Vorgelegewelle durch die erste Vorgelegewelle geführt ist und eine koaxial zu den beiden Getriebeeingangswellen angeordnete Abtriebswelle aufweist, wobei im ersten Teilgetriebe die ungeraden Vorwärtsgänge und im zweiten Teilgetriebe die geraden Vorwärtsgänge erzeugt werden und wobei die Lastschaltkupplungen antriebsseitig mit einem Antriebsaggregat verbunden sind. Des Weiteren bildet die Abtriebswelle des Hauptgetriebes die Antriebswelle des Gruppengetriebes, welches vorzugsweise als Planetengetriebe ausgeführt ist, das koaxial zu den Getriebeeingangswellen angeordnet ist.

Gemäß der Erfindung ist auf der zweiten Getriebeeingangswelle ein erstes Festrad vorgesehen, welches mit einem zweiten Festrad auf der zweiten Vorgelegewelle kämmt, wodurch die erste Radebene des Getriebes gebildet wird, wobei auf der ersten Getriebeeingangswelle ein mittels eines ersten formschlüssigen Schaltelementes schaltbares erstes Losrad und ein mittels eines zweiten formschlüssigen Schaltelementes schaltbares zweites Losrad angeordnet sind, welche zur Bildung der zweiten und dritten Radebene des Getriebes jeweils mit einem dritten und einem vierten Festrad, die auf der ersten Vorgelegewelle angeordnet sind, kämmen, wobei das zweite schaltbare Losrad wahlweise mittels des zweiten formschlüssigen Schaltelementes mit der ersten Getriebeeingangswelle oder mittels eines dritten formschlüssigen Schaltelementes mit der Abtriebswelle des Hauptgetriebes lösbar verbindbar ist. Ferner ist auf der Abtriebswelle des Hauptgetriebes ein mittels eines vierten formschlüssigen Schaltelementes schaltbares drittes Losrad angeordnet, welches zur Bildung der vierten Radebene des Getriebes mit einem auf der ersten Vorgelegewelle angeordneten fünften Festrad kämmt. Gemäß der Erfindung ist die erste Vorgelegewelle mittels eines fünften formschlüssigen Schaltelementes mit der zweiten Vorgelegewelle lösbar drehfest verbindbar.

Ferner ist auf der Abtriebswelle des Hauptgetriebes ein sechstes Festrad angeordnet, welches zur Bildung der fünften Radebene des Getriebes mit einem auf der zweiten Vorgelegewelle angeordneten und mittels eines sechsten formschlüssigen Schaltelementes schaltbaren vierten Losrad kämmt.

Des Weiteren ist zur Realisierung des Rückwärtsgangs auf der Abtriebswelle des Hauptgetriebes ein mittels eines siebten formschlüssigen Schaltelementes schaltbares fünftes Losrad angeordnet, welches mit einem Zwischenrad einer Zwischenwelle zur Drehzahlumkehr kämmt, welches wiederum mit einem auf der zweiten Vorgelegewelle angeordneten siebten Festrad kämmt, wodurch die Rückwärts-gang-Radebene gebildet wird.

In einer ersten nicht beanspruchten Ausführungsform ist die Abtriebswelle des Hauptgetriebes mit dem Sonnenrad des als Planetengetriebe ausgeführten Gruppengetriebes verbunden, wobei die Abtriebswelle des Gruppengetriebes mit dem Steg des Planetengetriebes verbunden ist. Des Weiteren ist das Hohlrad des Planetengetriebes über ein achtes formschlüssiges Schaltelement mit der Abtriebswelle des Hauptgetriebes und somit mit dem Sonnenrad des Planetengetriebes lösbar verbindbar, so dass bei geschlossenem achten Schaltelement das Planetengetriebe verblockt wird, was der Stellung "high" entspricht. Ferner ist ein neuntes formschlüssiges Schaltelement vorgesehen, mittels dessen das Hohlrad des Planetengetriebes lösbar an das Gehäuse koppelbar ist, was der Stellung "low" entspricht. Gemäß der Erfindung ist auf der Abtriebswelle des Gruppengetriebes, welche den Abtrieb des Doppelkupplungsgetriebes bildet, ein mittels eines zehnten formschlüssigen Schaltelementes schaltbares sechstes Losrad angeordnet, welches zur Bildung einer Überbrückungsradebene für das Gruppengetriebe mit einem auf der zweiten Vorgelegewelle angeordneten achten Festrad kämmt, wodurch die zweite Vorgelegewelle mit dem Abtrieb des Gruppengetriebes lösbar verbindbar ist.

Im Rahmen einer weiteren nicht beanspruchten Ausführungsform kann die Überbrückungsradebene für das Gruppengetriebe in Kraftflussrichtung im Zugbetrieb vor dem Gruppengetriebe angeordnet sein, wobei das sechste Losrad auf der Abtriebswelle des Hauptgetriebes angeordnet ist, mittels des zehnten formschlüssigen Schaltelementes mit dem Steg und somit mit dem Abtrieb des als Planetengetriebe ausgeführten Gruppengetriebes lösbar verbindbar ist und mit dem auf der zweiten Vorgelegewelle angeordneten achten Festrad kämmt. Diese Ausgestaltung weist den Vorteil auf, dass die zweite Vorgelegewelle kürzer ausgeführt ist, so dass der Hohlraddurchmesser des Planetengetriebes nicht achsabstandsbestimmend ist.

Hierbei ist das Hohlrad des Planetengetriebes über ein elftes formschlüssiges Schaltelement mit dem Steg des Planetengetriebes lösbar verbindbar, so dass bei geschlossenem elften Schaltelement das Planetengetriebe verblockt wird, was der Stellung "high" entspricht, wobei das achte formschlüssige Schaltelement entfällt. Über das neunte formschlüssige Schaltelement ist das Hohlrad des Planetengetriebes lösbar an das Gehäuse koppelbar, was der Stellung "low" entspricht. Hierbei können das neunte und elfte Schaltelement zu einem Doppelschaltelement mit geneinsamer Aktuatorik zusammengefasst werden. Alternativ können das elfte und das siebte Schaltelement zu einem Doppelschaltelement mit geneinsamer Aktuatorik zusammengefasst werden, wobei zu diesem Zweck der Steg des Planetengetriebes in Form einer Hohlwelle bis zur Rückwärtsgang-Radebene verlängert wird. Hierbei entsteht der Vorteil, dass der Leistungsfluss bei geschlossenem elften Schaltelement nicht über die Verzahnung des Planetengetriebes sondern direkt über den Steg zum Abtrieb geleitet wird.

Im Rahmen einer erfindungsgemäßen Ausführungsform hingegen ist das Gruppengetriebe als Getriebe in Vorgelegebauweise, umfassend eine dritte und eine vierte Vorgelegewelle ausgeführt. Hierbei weist die Abtriebswelle des Hauptgetriebes axial betrachtet in Kraftflussrichtung im Zugbetrieb nach der Rückwärtsgang-Radebene ein siebtes schaltbares Losrad auf, welches mit einem neunten Festrad der vierten Vorgelegewelle und einem elften Festrad der dritten Vorgelegewelle kämmt und über ein zwölftes formschlüssiges Schaltelement mit der Abtriebswelle des Hauptgetriebes lösbar verbindbar ist und ein achtes schaltbares Losrad auf, welches mit einem zehnten Festrad der vierten Vorgelegewelle und einem zwölften Festrad der dritten Vorgelegewelle kämmt und über ein dreizehntes formschlüssiges Schaltelement mit der Abtriebswelle des Hauptgetriebes lösbar verbindbar ist. Das achte Losrad bildet den Abtrieb des Getriebes. Ferner ist zur Überbrückung des Gruppengetriebes die dritte Vorgelegewelle und somit der Abtrieb des Getriebes über ein vierzehntes formschlüssiges Schaltelement mit der zweiten Vorgelegewelle lösbar verbindbar. Bei diesem Ausführungsbeispiel entfallen das achte, neunte, zehnte und elfte Schaltelement.

Im Rahmen vorteilhafter Weiterbildungen der Erfindung kann das erfindungsgemäße Getriebe ausgehend von den beschriebenen Ausführungsformen hybridisiert werden, wobei zu diesem Zweck eine der Getriebeeingangswellen, vorzugsweise die zweite Getriebeeingangswelle, mit einer elektrischen Maschine verbunden ist, wobei die dieser Getriebeeingangswelle zugeordnete Lastschaltkupplung entfällt und wobei die Abtriebsseite der Lastschaltkupplung der anderen Getriebeeingangswelle mittels eines weiteren formschlüssigen Schaltelementes mit der mit der elektrischen Maschine verbundenen Getriebeeingangswelle verbindbar ist.

Das erfindungsgemäße Doppelkupplungsgetriebe in Vorgelegebauweise weist insgesamt fünfzehn Vorwärts-Gänge und sechs Rückwärts-Gänge auf, wobei sämtliche Gänge lastschaltbar ausgeführt sind, da das Gruppengetriebe überbrückt wird.

Die Erfindung wird im Folgenden anhand der beigefügten Figuren beispielhaft näher erläutert. In diesen stellen dar:
- Figur 1:: eine schematische Darstellung einer ersten nicht beanspruchten Ausführungsform eines Doppelkupplungsgetriebes mit einem Hauptgetriebe und einem nachgeschalteten Gruppengetriebe;
- Figur 2:: ein beispielhaftes Schaltschema für ein Doppelkupplungsgetriebe gemäß Figur 1;
- Figur 3:: eine schematische Darstellung einer zweiten nicht beanspruchten Ausführungsform eines Doppelkupplungsgetriebes mit einem Hauptgetriebe und einem nachgeschalteten Gruppengetriebe;
- Figur 4:: eine schematische Darstellung einer dritten nicht beanspruchten Ausführungsform eines Doppelkupplungsgetriebes mit einem Hauptgetriebe und einem nachgeschalteten Gruppengetriebe;
- Figur 5:: ein beispielhaftes Schaltschema für ein Doppelkupplungsgetriebe gemäß Figuren 3 und 4;

- Figur 6:: eine schematische Darstellung einer vierten, erfindungsgemäßen Ausführungsform eines Doppelkupplungsgetriebes mit einem Hauptgetriebe und einem nachgeschalteten Gruppengetriebe;
- Figur 7:: ein beispielhaftes Schaltschema für ein Doppelkupplungsgetriebe gemäß Figur 6; und
- Figur 8:: eine schematische Darstellung einer fünften, nicht beanspruchten Ausführungsform eines Doppelkupplungsgetriebes mit einem Hauptgetriebe und einem nachgeschalteten Gruppengetriebe.

Der Aufbau von Doppelkupplungsgetrieben in Vorgelegebauweise ist dem Fachmann bestens bekannt, so dass im Rahmen der Figurenbeschreibung nur die erfindungsrelevanten Bauteile ausführlich beschrieben und erläutert werden. Gleiche Bezugszeichen bezeichnen gleiche Bauteile.

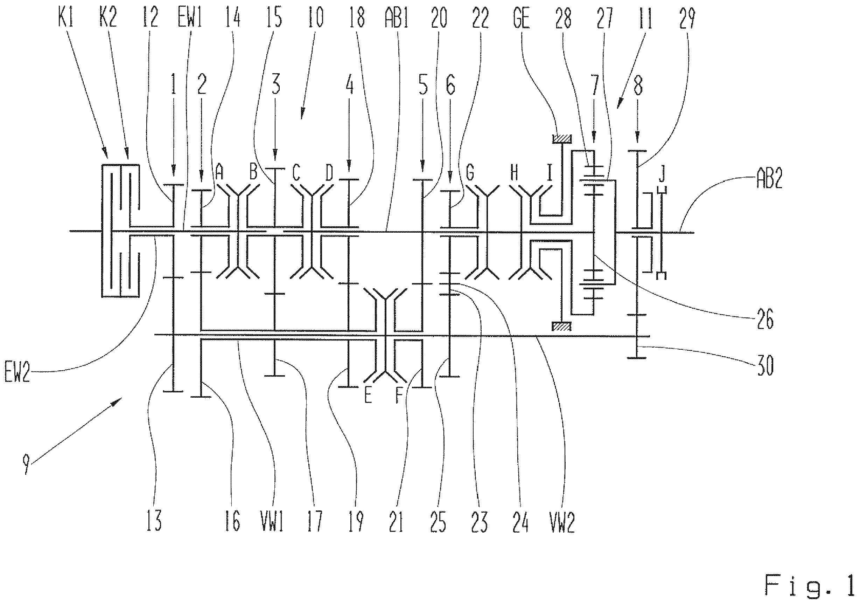

In Figur 1 ist ein Doppelkupplungsgetriebe 9 in Vorgelegebauweise, umfassend ein Hauptgetriebe 10 und ein dem Hauptgetriebe 10 nachgeschaltetes Gruppengetriebe 11 dargestellt, wobei das Hauptgetriebe 10 eine mit der Abtriebsseite einer ersten Lastschaltkupplung K1 verbundene, als Vollwelle ausgeführte erste Getriebeeingangswelle EW1, die einem ersten Teilgetriebe zugeordnet ist und eine mit der Abtriebsseite einer zweiten Lastschaltkupplung K2 verbundene, als Hohlwelle ausgeführte zweite Getriebeeingangswelle EW2, durch die die erste Getriebeeingangswelle EW1 geführt ist und einem zweiten Teilgetriebe zugeordnet ist, zwei koaxial zueinander angeordnete Vorgelegewellen VW1, VW2, wobei die erste Vorgelegewelle VW1 als Hohlwelle ausgeführt ist und die zweite Vorgelegewelle VW2 durch die erste Vorgelegewelle VW1 geführt ist und eine koaxial zu den beiden Getriebeeingangswellen EW1, EW2 angeordnete Abtriebswelle AB1 aufweist, wobei im ersten Teilgetriebe die ungeraden Vorwärtsgänge und im zweiten Teilgetriebe die geraden Vorwärtsgänge erzeugt werden und wobei die Lastschaltkupplungen K1, K2 antriebsseitig mit einem Antriebsaggregat verbunden sind. Wie aus Figur 1 ersichtlich, bildet die Abtriebswelle AB1 des Hauptgetriebes 10 die Antriebswelle des Gruppen-(Ersatzblatt) 8 getriebes 11, welches bei dem gezeigten Beispiel als Planetengetriebe ausgeführt ist, das koaxial zu den Getriebeeingangswellen EW1, EW2 angeordnet ist.

Bezugnehmend auf Figur 1 ist auf der zweiten Getriebeeingangswelle EW2 ein erstes Festrad 12 vorgesehen, welches mit einem zweiten Festrad 13 auf der zweiten Vorgelegewelle VW2 zur Bildung der ersten Radebene 1 des Getriebes 9 kämmt, wobei auf der ersten Getriebeeingangswelle EW1 ein mittels eines ersten formschlüssigen Schaltelementes A schaltbares erstes Losrad 14 und ein mittels eines zweiten formschlüssigen Schaltelementes B schaltbares zweites Losrad 15 angeordnet sind, welche zur Bildung der zweiten und dritten Radebene 2, 3 des Getriebes jeweils mit einem dritten 16 und einem vierten Festrad 17, die auf der ersten Vorgelegewelle VW1 angeordnet sind, kämmen. Hierbei ist das zweite schaltbare Losrad 15 wahlweise mittels des zweiten formschlüssigen Schaltelementes B mit der ersten Getriebeeingangswelle EW1 oder mittels eines dritten formschlüssigen Schaltelementes C mit der Abtriebswelle AB1 des Hauptgetriebes 10 lösbar drehfest verbindbar.

Wie Figur 1 zu entnehmen, ist auf der Abtriebswelle AB1 des Hauptgetriebes 10 ein mittels eines vierten formschlüssigen Schaltelementes D schaltbares drittes Losrad 18 angeordnet, welches zur Bildung der vierten Radebene 4 des Getriebes mit einem auf der ersten Vorgelegewelle VW1 angeordneten fünften Festrad 19 kämmt. Dabei ist die erste Vorgelegewelle VW1 mittels eines fünften formschlüssigen Schaltelementes E mit der zweiten Vorgelegewelle VW2 lösbar drehfest verbindbar.

Bezugnehmend auf Figur 1 ist auf der Abtriebswelle AB1 des Hauptgetriebes 10 ein sechstes Festrad 20 angeordnet, welches zur Bildung der fünften Radebene 5 des Getriebes 9 mit einem auf der zweiten Vorgelegewelle VW2 angeordneten und mittels eines sechsten formschlüssigen Schaltelementes F schaltbaren vierten Losrad 21 kämmt.

Zur Realisierung der Rückwärts-Gänge ist auf der Abtriebswelle AB1 des Hauptgetriebes 10 ein mittels eines siebten formschlüssigen Schaltelementes G schaltbares fünftes Losrad 22 angeordnet, welches mit einem Zwischenrad 23 einer Zwischenwelle 24 zur Drehzahlumkehr kämmt, welches wiederum mit einem auf der zweiten Vorgelegewelle VW2 angeordneten siebten Festrad 25 kämmt, wodurch die sechste, Rückwärtsgang-Radebene 6 gebildet wird.

Ferner ist die Abtriebswelle AB1 des Hauptgetriebes 9 mit dem Sonnenrad 26 des als Planetengetriebe ausgeführten Gruppengetriebes 11 verbunden, wobei die Abtriebswelle AB2 des Gruppengetriebes 11 mit dem Steg 27 des Planetengetriebes verbunden ist. Das Hohlrad 28 des Planetengetriebes ist über ein achtes formschlüssiges Schaltelement H mit der Abtriebswelle AB1 des Hauptgetriebes 9 und somit mit dem Sonnenrad 26 des Planetengetriebes lösbar verbindbar; bei geschlossenem achten Schaltelement H ist das Planetengetriebe verblockt, was der Stellung "high" entspricht. Dabei ist ein neuntes formschlüssiges Schaltelement I vorgesehen, mittels dessen das Hohlrad 28 des Planetengetriebes lösbar an das Gehäuse GE koppelbar ist, was der Stellung "low" entspricht, wobei auf der Abtriebswelle AB2 des Gruppengetriebes 11, welche den Abtrieb des Doppelkupplungsgetriebes 9 bildet, ein mittels eines zehnten formschlüssigen Schaltelementes J schaltbares sechstes Losrad 29 angeordnet ist, welches zur Bildung einer Überbrückungsradebene 8 für das Gruppengetriebe 11 mit einem auf der zweiten Vorgelegewelle VW2 angeordneten achten Festrad 30 kämmt. In der Figur ist mit 7 die siebte Radebene des Getriebes 9 bezeichnet.

Bei dem gezeigten Beispiel sind das erste und zweite Schaltelement A, B, das dritte und vierte Schaltelement C, D, das fünfte und sechste Schaltelement E, F und das achte und neunte Schaltelement H, I jeweils zu einem Doppelschaltelement mit gemeinsamer Aktuatorik zusammengefasst.

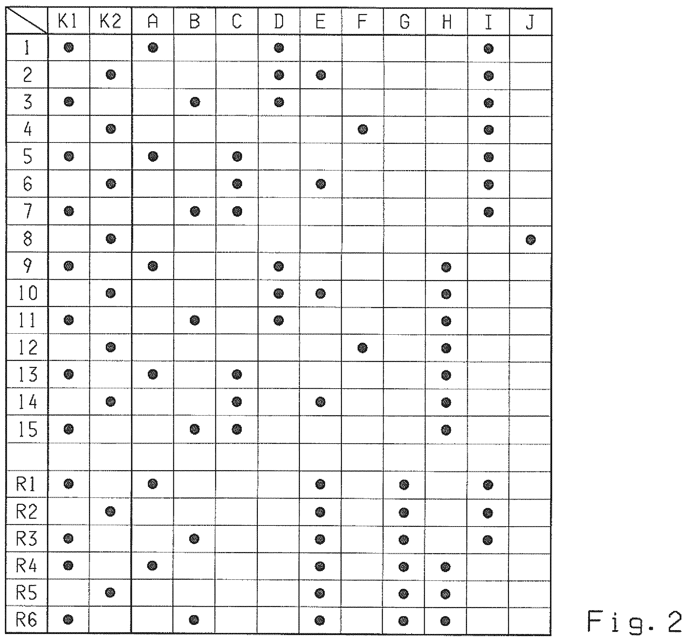

Bezugnehmend auf das Schaltschema gemäß Figur 2, wird bei dem in Figur 1 gezeigten Getriebe 9 der erste Vorwärts-Gang durch Schalten der ersten Lastschaltkupplung K1, d.h. bei in den Kraftfluss geschalteter erster Getriebeeingangswelle EW1, und des ersten, vierten und neunten Schaltelementes A, D und I geschaltet. Der zweite Vorwärts-Gang ergibt sich durch Schließen der zweiten Lastschaltkupplung K2 und des vierten, fünften und neunten Schaltelementes D, E, I, der dritte Vorwärts-Gang durch Schließen der ersten Lastschaltkupplung K1 und des zweiten, vierten und neunten Schaltelementes B, D, I, der vierte Vorwärts-Gang durch Schließen der zweiten Lastschaltkupplung K2 und des sechsten und neunten Schaltelementes F, I, der fünfte Vorwärts-Gang durch Schließen der ersten Lastschaltkupplung K1 und des ersten, dritten und neunten Schaltelementes A, C, I, der sechste Vorwärts-Gang durch Schließen der zweiten Lastschaltkupplung K2 und des dritten, fünften und neunten Schaltelementes C, E, I, wobei sich der siebte Vorwärts-Gang durch Schließen der ersten Lastschaltkupplung K1 und des zweiten, dritten und neunten Schaltelementes B, C, I ergibt. Demnach wird im siebten Vorwärts-Gang die Leistung von der ersten Eingangswelle EW1 direkt auf die Abtriebswelle AB1 des Hauptgetriebes 9 übertragen, wobei die Übersetzung des siebten Vorwärts-Gangs der Übersetzung des Gruppengetriebes 11 in der Stellung "low" entspricht.

Dabei ergibt sich der als Stützgang dienende achte Vorwärtsgang durch Schließen der zweiten Lastschaltkupplung K2 und des zehnten Schaltelementes J, wodurch das Gruppengetriebe 11 überbrückt wird und sich nicht mehr im Leistungsfluss befindet, so dass es durch Schließen des achten Schaltelementes H auf "high" geschaltet werden kann; anschließend können die weiteren Vorwärts-Gänge 9-15 geschaltet werden können.

Die Vorwärts-Gänge 9 bis 15 werden analog zu den Vorwärts-Gängen 1-7 geschaltet, wobei anstelle des neunten Schaltelementes I das achte Schaltelement H geschlossen ist.

Bezugnehmend auf Figur 2 ergibt sich der erste Rückwärts-Gang durch Schließen der ersten Lastschaltkupplung K1 und des ersten, fünften, siebten und neunten Schaltelementes A, E, G, I, der zweite Rückwärts-Gang durch Schließen der zweiten Lastschaltkupplung K2 und des fünften, siebten und neunten Schaltelementes E, G, I, der dritte Rückwärts-Gang durch Schließen der ersten Lastschaltkupplung K1 und des zweiten, fünften, siebten und neunten Schaltelementes B, E, G, I, wobei sich die Rückwärts-Gänge 4-6 analog zu den Rückwärts-Gängen 1-3 ergeben, mit dem Unterschied, dass das Gruppengetriebe 11 auf "high" geschaltet ist, so dass anstelle des neunten Schaltelementes I das achte Schaltelement H geschlossen ist.

Somit wird ein Doppelkupplungsgetriebe mit einem Gruppengetriebe geschaffen, welches inklusive dem als Stützgang dienenden achten Vorwärts-Gang fünfzehn lastschaltbare Vorwärts-Gänge aufweist.

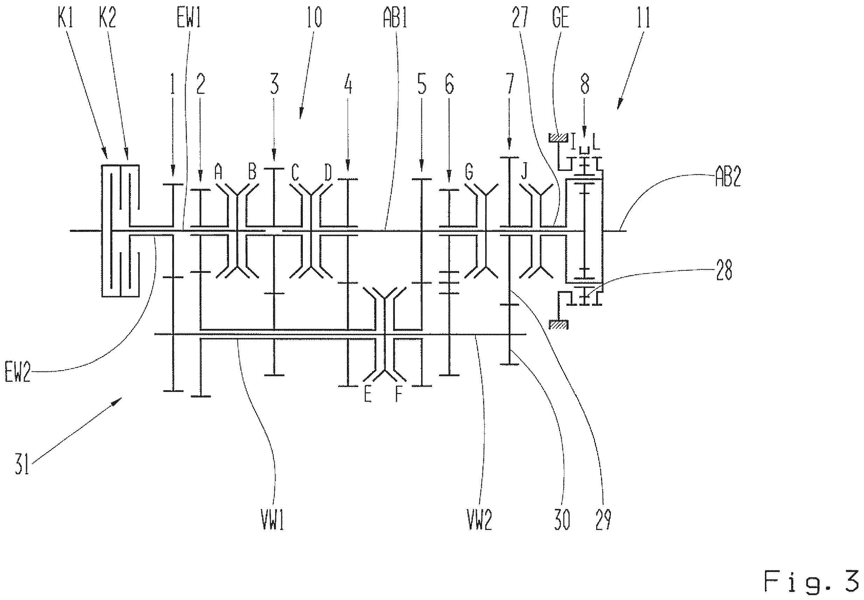

Das in Figur 3 gezeigte Getriebe 31 unterscheidet sich vom Ausführungsbeispiel nach Figur 1 dadurch, dass die Überbrückungsradebene für das Gruppengetriebe11 in Kraftflussrichtung im Zugbetrieb vor dem Gruppengetriebe 11 angeordnet ist und die siebte Radebene 7 des Getriebes 31 bildet, wobei das sechste Losrad 29 auf der Abtriebswelle AB1 des Hauptgetriebes 10 angeordnet ist, mittels des zehnten formschlüssigen Schaltelementes J mit dem Steg 27 und somit mit dem Abtrieb AB2 des als Planetengetriebe ausgeführten Gruppengetriebes 11 lösbar verbindbar ist und mit dem auf der zweiten Vorgelegewelle VW2 angeordneten achten Festrad 30 kämmt. Diese Ausgestaltung weist den Vorteil auf, dass die zweite Vorgelegewelle VW2 kürzer als bei dem Ausführungsbeispiel nach Figur 1 ausgeführt ist, so dass der Hohlraddurchmesser des Planetengetriebes nicht achsabstandsbestimmend ist.

Hierbei ist das Hohlrad 28 des Planetengetriebes über ein elftes formschlüssiges Schaltelement L mit dem Steg 27 des Planetengetriebes lösbar verbindbar, so dass bei geschlossenem elften Schaltelement das Planetengetriebe verblockt wird, was der Stellung "high" entspricht, wobei das in Figur 1 gezeigte achte formschlüssige Schaltelement I entfällt. Über das neunte formsschlüssige Schaltelement I ist das Hohlrad 28 des Planetengetriebes lösbar an das Gehäuse GE koppelbar, was der Stellung "low" entspricht. In vorteilhafter Weise können das neunte und elfte Schaltelement I, L zu einem Doppelschaltelement mit geneinsamer Aktuatorik zusammengefasst werden. Ferner sind bei dem gezeigten Beispiel das erste und zweite Schaltelement A, B, das dritte und vierte Schaltelement C, D und das fünfte und sechste Schaltelement E ebenfalls jeweils zu einem Doppelschaltelement mit gemeinsamer Aktuatorik zusammengefasst.

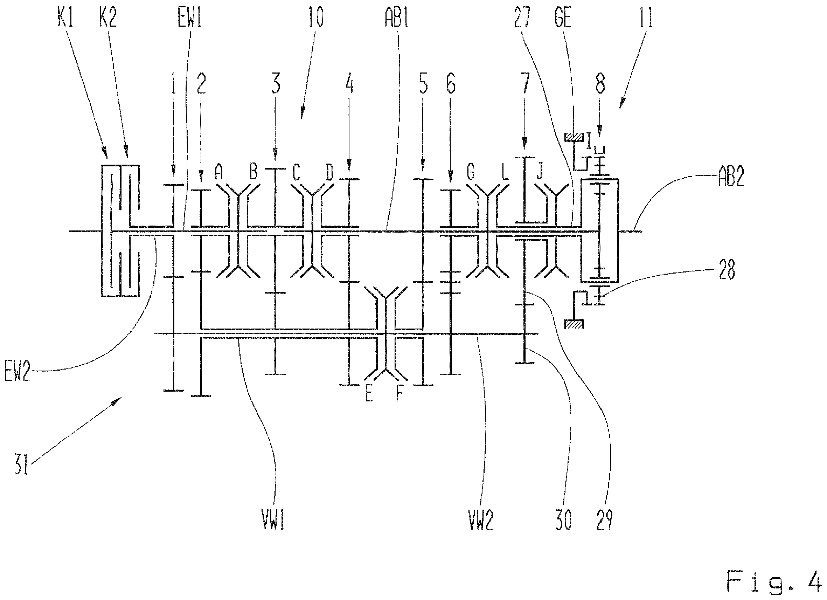

Alternativ können ausgehend vom Ausführungsbeispiel nach Figur 3 das elfte und das siebte Schaltelement L, G zu einem Doppelschaltelement mit geneinsamer Aktuatorik zusammengefasst werden, wobei zu diesem Zweck der Steg 27 des Planetengetriebes in Form einer Hohlwelle bis zur Rückwärtsgang-Radebene 6 verlängert wird, so dass der Vorteil entsteht, dass der Leistungsfluss bei geschlossenem elften Schaltelement L nicht über die Verzahnung des Planetengetriebes sondern direkt über den Steg zum Abtrieb AB2 geleitet wird. Diese Ausführungsform wird anhand Figur 4 veranschaulicht.

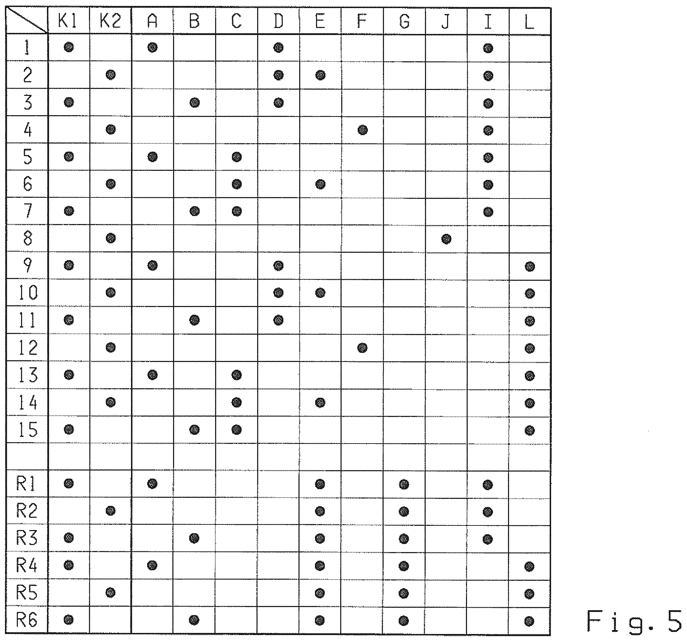

Ein beispielhaftes Schaltschema für die in Figuren 3 und 4 gezeigten Getriebe ist Gegenstand der Figur 5. Dieses Schaltschema unterscheidet sich vom Schaltschema nach Figur 2 dadurch, dass das achte Schaltelement H zum Schalten des Gruppengetriebes 11 auf "high" durch das elfte Schaltelement L ersetzt ist.

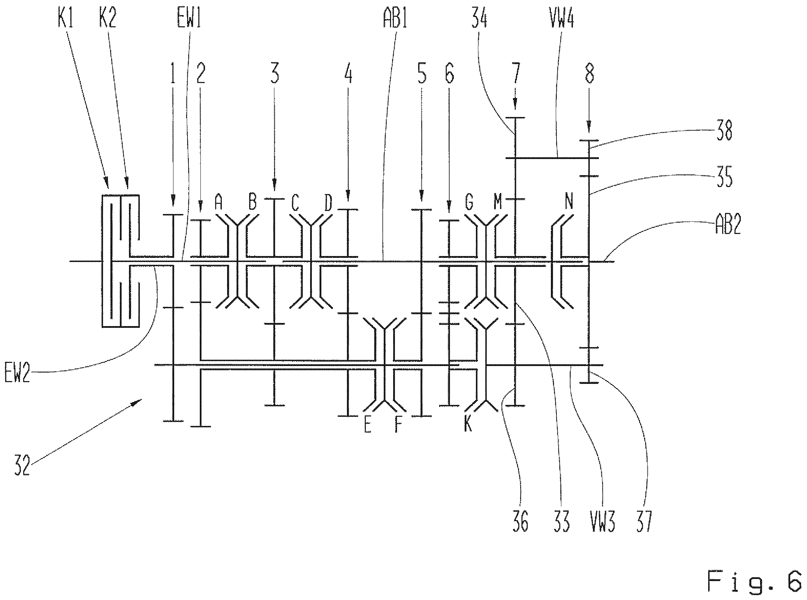

Gegenstand der Figur 6 ist ein erfindungsgemäßes Getriebe 32, bei dem das Gruppengetriebe 11 als Getriebe in Vorgelegebauweise, umfassend eine dritte und eine vierte Vorgelegewelle VW3, VW4 ausgeführt ist, wobei der Aufbau des Hauptgetriebes 10, dem Aufbau gemäß Figuren 1, 3 und 4 entspricht. Hierbei weist die Abtriebswelle AB1 des Hauptgetriebes axial betrachtet in Kraftflussrichtung im Zugbetrieb nach der Rückwärtsgang-Radebene 6 ein siebtes schaltbares Losrad 33, welches mit einem neunten Festrad 34 der vierten Vorgelegewelle VW4 und einem elften Festrad 36 der dritten Vorgelegewelle VW3 kämmt und über ein zwölftes formschlüssiges Schaltelement M mit der Abtriebswelle AB1 des Hauptgetriebes lösbar verbindbar ist und ein achtes schaltbares Losrad 35 auf, welches mit einem zehnten Festrad 37 der vierten Vorgelegewelle VW4 und einem zwölften Festrad 38 der dritten Vorgelegewelle VW3 kämmt und über ein dreizehntes formschlüssiges Schaltelement N mit der Abtriebswelle AB1 des Hauptgetriebes 10 lösbar verbindbar ist. Das achte Losrad 35 bildet den Abtrieb AB2 des Getriebes. Ferner ist die dritte Vorgelegewelle VW3 über ein vierzehntes formschlüssiges Schaltelement K mit der zweiten Vorgelegewelle VW2 lösbar verbindbar.

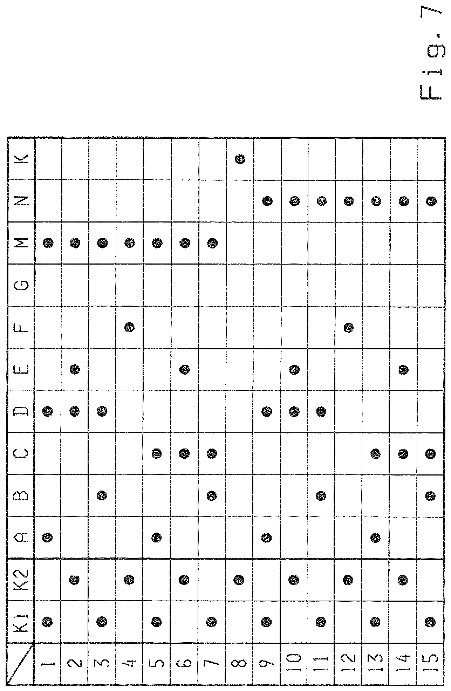

Bei dieser Ausführungsform wird das Gruppengetriebe 11 bei geschlossener zweiter Lastschaltkupplung und geschlossenem vierzehnten Schaltelement K überbrückt. Durch Schließen des zwölften Schaltelementes M wird das Gruppengetriebe nach "low" geschaltet, wobei eine Schaltung nach "high" durch Schließen des dreizehnten Schaltelementes N erzielt wird. Ein beispielhaftes Schaltschema für die Vorwärts-Gänge ist Gegenstand der Figur 7. Das Schaltschema unterscheidet sich vom Schaltschema nach Figur 2 dadurch, dass das achte Schaltelement H zum Schalten des Gruppengetriebes 11 auf "high" durch das dreizehnte Schaltelement N ersetzt wird, dass das neunte Schaltelement I zum Schalten des Gruppengetriebes 11 auf "low" durch das zwölfte Schaltelement M ersetzt wird und dass das zehnte Schaltelement J durch das vierzehnte Schaltelement K ersetzt wird. Die sechs Rückwärts-Gänge werden analog zum Schaltschema nach Figur 2 geschaltet, wobei das achte Schaltelement H durch das dreizehnte Schaltelement N ersetzt wird und das neunte Schaltelement I durch das zwölfte Schaltelement M ersetzt wird.

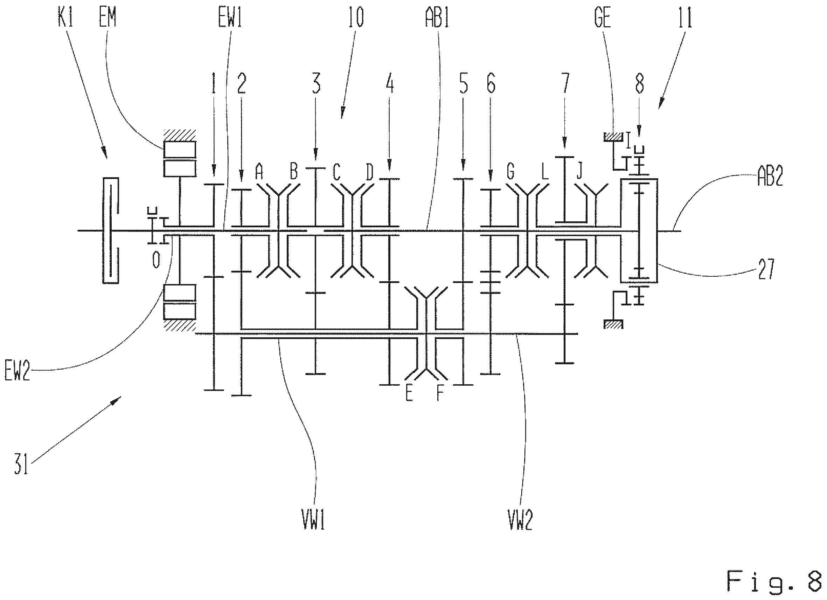

Das erfindungsgemäße Getriebe kann ausgehend von den beschriebenen Ausführungsformen hybridisiert werden, was anhand Figur 8, welche ein für sich genommen nicht erfindungsgemäßes Getriebe 9 gemäß Figur 4 in hybridisierter Form darstellt, veranschaulicht wird. Hierbei ist zweite Getriebeeingangswelle EW2 mit einer elektrischen Maschine EM verbunden, wobei die der zweiten Getriebeeingangswelle EW2 zugeordnete Lastschaltkupplung entfällt und wobei die Abtriebsseite der Lastschaltkupplung K1 der ersten Getriebeeingangswelle EW1 mittels eines weiteren formschlüssigen Schaltelementes O mit der mit der elektrischen Maschine EM verbundenen zweiten Getriebeeingangswelle EW2 verbindbar ist.

### Bezugszeichen

- 1: erste Radebene des Getriebes
- 2: zweite Radebene des Getriebes
- 3: dritte Radebene des Getriebes
- 4: vierte Radebene des Getriebes
- 5: fünfte Radebene des Getriebes
- 6: sechste Radebene des Getriebes,
- 7: siebte Radebene des Getriebes
- 8: achte Radebene des Getriebes
- 9: Getriebe
- 10: Hauptgetriebe
- 11: Gruppengetriebe
- 12: erstes Festrad
- 13: zweites Festrad
- 14: erstes Losrad
- 15: zweites Losrad
- 16: drittes Festrad
- 17: viertes Festrad
- 18: drittes Losrad
- 19: fünftes Festrad
- 20: sechstes Festrad
- 21: viertes Losrad
- 22: fünftes Losrad
- 23: Zwischenrad
- 24: Zwischenwelle
- 25: siebtes Festrad
- 26: Sonnenrad
- 27: Steg
- 28: Hohlrad
- 29: sechstes Losrad
- 30: achtes Festrad
- 31: Getriebe
- 32: Getriebe
- 33: siebtes Losrad
- 34: neuntes Festrad
- 35: achtes Losrad
- 36: elftes Festrad
- 37: zehntes Festrad
- 38: zwölftes Festrad
- K1: erste Lastschaltkupplung
- K2: zweite Lastschaltkupplung
- A: erstes Schaltelement
- B: zweites Schaltelement
- C: drittes Schaltelement
- D: viertes Schaltelement
- E: fünftes Schaltelement
- F: sechstes Schaltelement
- G: siebtes Schaltelement
- H: achtes Schaltelement
- I: neuntes Schaltelemen
- J: zehntes Schaltelement
- L: elftes Schaltelement
- M: zwölftes Schaltelement
- N: dreizehntes Schaltelement
- K: vierzehntes Schaltelement
- O: weiteres Schaltelement
- GE: Gehäuse
- EM: elektrische Maschine
- EW1: erste Getriebeeingangswelle
- EW2: zweite Getriebeeingangswelle
- VW1: erste Vorgelegewelle
- VW2: zweite Vorgelegewelle
- VW3: dritte Vorgelegewelle
- VW4: vierte Vorgelegewelle

## Patentansprüche

1. Doppelkupplungsgetriebe (9, 31, 32) in Vorgelegebauweise, umfassend ein Hauptgetriebe (10) und ein dem Hauptgetriebe (10) nachgeschaltetes Gruppengetriebe (11), wobei das Hauptgetriebe (10) eine mit der Abtriebsseite einer ersten Lastschaltkupplung (K1) verbundene, als Vollwelle ausgeführte erste Getriebeeingangswelle (EW1), eine mit der Abtriebsseite einer zweiten Lastschaltkupplung (K2) verbundene, als Hohlwelle ausgeführte zweite Getriebeeingangswelle (EW2), durch die die erste Getriebeeingangswelle (EW1) geführt ist, zwei koaxial zueinander angeordnete Vorgelegewellen (VW1, VW2), wobei die erste Vorgelegewelle (VW1) als Hohlwelle ausgeführt ist und die zweite Vorgelegewelle (VW2) durch die erste Vorgelegewelle (VW1) geführt ist und eine koaxial zu den beiden Getriebeeingangswellen (EW1, EW2) angeordnete Abtriebswelle (AB1) aufweist, welche die Antriebswelle des Gruppengetriebes (11) bildet, wobei die Lastschaltkupplungen (K1, K2) antriebsseitig mit einem Antriebsaggregat verbunden sind, wobei auf der zweiten Getriebeeingangswelle (EW2) ein erstes Festrad (12) angeordnet ist, welches mit einem zweiten Festrad (13) auf der zweiten Vorgelegewelle (VW2) kämmt, wobei auf der ersten Getriebeeingangswelle (EW1) ein mittels eines ersten formschlüssigen Schaltelementes (A) schaltbares erstes Losrad (14) und ein mittels eines zweiten formschlüssigen Schaltelementes (B) schaltbares zweites Losrad (15) angeordnet sind, welche jeweils mit einem dritten (16) und einem vierten Festrad (17) auf der ersten Vorgelegewelle (VW1) kämmen, wobei das zweite schaltbare Losrad (15) wahlweise mittels des zweiten formschlüssigen Schaltelementes (B) mit der ersten Getriebeeingangswelle (EW1) oder mittels eines dritten formschlüssigen Schaltelementes (C) mit der Abtriebswelle (AB1) des Hauptgetriebes (10) lösbar drehfest verbindbar ist, wobei auf der Abtriebswelle (AB1) des Hauptgetriebes (10) ein mittels eines vierten formschlüssigen Schaltelementes (D) schaltbares drittes Losrad (18) angeordnet ist, welches mit einem auf der ersten Vorgelegewelle (VW1) angeordneten fünften Festrad (19) kämmt, wobei die erste Vorgelegewelle (VW1) mittels eines fünften formschlüssigen Schaltelementes (E) mit der zweiten Vorgelegewelle (VW2) lösbar drehfest verbindbar ist und auf der Abtriebswelle (AB1) des Hauptgetriebes (10) ein sechstes Festrad (20) angeordnet ist, welches mit einem auf der zweiten Vorgelegewelle (VW2) angeordneten und mittels eines sechsten formschlüssigen Schaltelementes (F) schaltbaren vierten Losrad (21) kämmt, wobei zur Realisierung der Rückwärts-Gänge und zur Bildung der Rückwärtsgang-Radebene (6) auf der Abtriebswelle (AB1) des Hauptgetriebes (10) ein mittels eines siebten formschlüssigen Schaltelementes (G) schaltbares fünftes Losrad (22) angeordnet ist, welches mit einem mit einem auf der zweiten Vorgelegewelle (VW2) angeordneten siebten Festrad (25) kämmenden Zwischenrad (23) einer Zwischenwelle (24) zur Drehzahlumkehr kämmt und wobei zur Überbrückung des Gruppengetriebes (11) die zweite Vorgelegewelle (VW2) mittels eines Schaltelementes (J, K) mit dem Abtrieb (AB2) des Gruppengetriebes (11) lösbar verbindbar ist und wobei das Gruppengetriebe (11) als Getriebe in Vorgelegebauweise, umfassend eine dritte und eine vierte Vorgelegewelle (VW3, VW4) ausgeführt ist, wobei die Abtriebswelle (AB1) des Hauptgetriebes (10) axial betrachtet in Kraftflussrichtung im Zugbetrieb nach der Rückwärtsgang-Radebene (6) ein siebtes schaltbares Losrad (33), welches mit einem neunten Festrad (34) der vierten Vorgelegewelle (VW4) und einem elften Festrad (36) der dritten Vorgelegewelle (VW3) kämmt und über ein zwölftes formschlüssiges Schaltelement (M) mit der Abtriebswelle (AB1) des Hauptgetriebes (10) lösbar verbindbar ist und ein achtes schaltbares Losrad (35) aufweist, welches mit einem zehnten Festrad (37) der vierten Vorgelegewelle (VW4) und einem zwölften Festrad (38) der dritten Vorgelegewelle (VW3) kämmt und über ein dreizehntes formschlüssiges Schaltelement (N) mit der Abtriebswelle (AB1) des Hauptgetriebes (10) lösbar verbindbar ist, wobei das achte Losrad (35) den Abtrieb (AB2) des Getriebes (32) bildet und wobei die dritte Vorgelegewelle (VW3) über ein vierzehntes formschlüssiges Schaltelement (K) mit der zweiten Vorgelegewelle (VW2) lösbar verbindbar ist.

2. Doppelkupplungsgetriebe (9, 31, 32) in Vorgelegebauweise nach Anspruch 1, **dadurch gekennzeichnet, dass** es fünfzehn lastschaltbare Vorwärts-Gänge und sechs lastschaltbare Rückwärts-Gänge aufweist, wobei sich der erste Vorwärts-Gang durch Schließen der ersten Lastschaltkupplung (K1) und des ersten, vierten und neunten Schaltelementes (A, D und I), der zweite Vorwärts-Gang durch Schließen der zweiten Lastschaltkupplung (K2) und des vierten, fünften und neunten Schaltelementes (D, E, I), der dritte Vorwärts-Gang durch Schließen der ersten Lastschaltkupplung (K1) und des zweiten, vierten und neunten Schaltelementes (B, D, I), der vierte Vorwärts-Gang durch Schließen der zweiten Lastschaltkupplung (K2) und des sechsten und neunten Schaltelementes (F, I), der fünfte Vorwärts-Gang durch Schließen der ersten Lastschaltkupplung (K1) und des ersten, dritten und neunten Schaltelementes (A, C, I), der sechste Vorwärts-Gang durch Schließen der zweiten Lastschaltkupplung (K2) und des dritten, fünften und neunten Schaltelementes (C, E, I), und wobei sich der siebte Vorwärts-Gang durch Schließen der ersten Lastschaltkupplung (K1) und des zweiten, dritten und neunten Schaltelementes (B, C, I) ergibt, wobei sich der als Stützgang dienende achte Vorwärts-Gang durch Schließen der zweiten Lastschaltkupplung (K2) und des zehnten Schaltelementes (J) ergibt, wodurch das Gruppengetriebe (11) überbrückt wird, sich nicht im Leistungsfluss befindet und durch Schließen des achten Schaltelementes (H) auf "high" geschaltet werden kann und wobei sich die Vorwärts-Gänge 9 bis 15 analog zu den Vorwärts-Gängen 1-7 geschaltet werden, wobei anstelle des neunten Schaltelementes (I) das achte Schaltelement (H) geschlossen ist, wobei sich der erste Rückwärts-Gang durch Schließen der ersten Lastschaltkupplung (K1) und des ersten, fünften, siebten und neunten Schaltelementes (A, E, G, I), der zweite Rückwärts-Gang durch Schließen der zweiten Lastschaltkupplung (K2) und des fünften, siebten und neunten Schaltelementes (E, G, I) und wobei sich der dritte Rückwärts-Gang durch Schließen der ersten Lastschaltkupplung (K1) und des zweiten, fünften, siebten und neunten Schaltelementes (B, E, G, I) ergibt, wobei sich die Rückwärts-Gänge 4-6 analog zu den Rückwärts-Gängen 1-3 ergeben, mit dem Unterschied, dass das Gruppengetriebe (11) auf "high" geschaltet ist, so dass anstelle des neunten Schaltelementes (I) das achte Schaltelement (H) geschlossen ist wobei das achte Schaltelement (H) durch das dreizehnte Schaltelement (N), das neunte Schaltelement (I) durch das zwölfte Schaltelement (M) und das zehnte Schaltelement (J) durch das vierzehnte Schaltelement (K) ersetzt werden.

## Claims

1. Dual-clutch transmission (9, 31, 32) of countershaft type of construction, comprising a main transmission (10) and a range transmission (11) connected downstream of the main transmission (10), wherein the main transmission (10) has a first transmission input shaft (EW1), which is connected to the output side of a first powershift clutch (K1) and which is formed as a solid shaft, a second transmission input shaft (EW2), which is connected to the output side of a second powershift clutch (K2) and which is formed as a hollow shaft and through which the first transmission input shaft (EW1) is led, two countershafts (VW1, VW2) which are arranged coaxially with respect to one another, wherein the first countershaft (VW1) is formed as a hollow shaft and the second countershaft (VW2) is led through the first countershaft (VW1), and an output shaft (AB1) which is arranged coaxially with respect to the two transmission input shafts (EW1, EW2), which output shaft forms the drive shaft of the range transmission (11), wherein the powershift clutches (K1, K2) are connected, at the drive side, to a drive assembly, wherein, on the second transmission input shaft (EW2), there is arranged a first fixed gear (12) which meshes with a second fixed gear (13) on the second countershaft (VW2), wherein, on the first transmission input shaft (EW1), there are arranged a first idler gear (14), which can be engaged by means of a first positively locking engaging element (A), and a second idler gear (15), which can be engaged by means of a second positively locking engaging element (B), which idler gears mesh in each case with a third (16) and a fourth fixed gear (17) on the first countershaft (VW1), wherein the second engageable idler gear (15) is selectively detachably connectable rotationally conjointly by means of the second positively locking engaging element (B) to the first transmission input shaft (EW1) or by means of a third positively locking engaging element (C) to the output shaft (AB1) of the main transmission (10), wherein, on the output shaft (AB1) of the main transmission (10), there is arranged a third idler gear (18) which can be engaged by means of a fourth positively locking engaging element (D) which meshes with a fifth fixed gear (19) arranged on the first countershaft (VW1), wherein the first countershaft (VW1) is detachably connectable rotationally conjointly by means of a fifth positively locking engaging element (E) to the second countershaft (VW2), and on the output shaft (AB1) of the main transmission (10), there is arranged a sixth fixed gear (20) which meshes with a fourth idler gear (21) which is arranged on the second countershaft (VW2) and which can be engaged by means of a sixth positively locking engaging element (F), wherein, to realize the reverse ratios and to form the reverse ratio gear plane (6), on the output shaft (AB1) of the main transmission (10), there is arranged a fifth idler gear (22) which can be engaged by means of a seventh positively locking engaging element (G) and which meshes with an intermediate gear (23) of an intermediate shaft (24) for rotational speed reversal, which intermediate gear meshes with a seventh fixed gear (25) arranged on the second countershaft (VW2), and wherein, for bypassing the range transmission (11), the second countershaft (VW2) is detachably connectable by means of an engaging element (J, K) to the output (AB2) of the range transmission (11), and wherein the range transmission (11) is formed as a transmission of countershaft type of construction, comprising a third and a fourth countershaft (VW3, VW4), wherein the output shaft (AB1) of the main transmission (10) has, downstream of the reverse ratio gear plane (6) viewed axially in the power flow direction during traction operation, a seventh engageable idler gear (33), which meshes with a ninth fixed gear (34) of the fourth countershaft (VW4) and an eleventh fixed gear (36) of the third countershaft (VW3) and which is detachably connectable by means of a twelfth positively locking engaging element (M) to the output shaft (AB1) of the main transmission (10), and an eighth engageable idler gear (35), which meshes with a tenth fixed gear (37) of the fourth countershaft (VW4) and a twelfth fixed gear (38) of the third countershaft (VW3) and which is detachably connectable by means of a thirteenth positively locking engaging element (N) to the output shaft (AB1) of the main transmission (10), wherein the eighth idler gear (35) forms the output (AB2) of the transmission (32), and wherein the third countershaft (VW3) is detachably connectable by means of a fourteenth positively locking engaging element (K) to the second countershaft (VW2).

2. Dual-clutch transmission (9, 31, 32) of countershaft type of construction according to Claim 1, **characterized in that** said dual-clutch transmission has fifteen power-shiftable forward ratios and six power-shiftable reverse ratios, wherein the first forward ratio is realized by closing the first powershift clutch (K1) and the first, fourth and ninth engaging elements (A, D and I), the second forward ratio is realized by closing the second powershift clutch (K2) and the fourth, fifth and ninth engaging elements (D, E, I), the third forward ratio is realized by closing the first powershift clutch (K1) and the second, fourth and ninth engaging elements (B, D, I), the fourth forward ratio is realized by closing the second powershift clutch (K2) and the sixth and ninth engaging elements (F, I), the fifth forward ratio is realized by closing the first powershift clutch (K1) and the first, third and ninth engaging elements (A, C, I), the sixth forward ratio is realized by closing the second powershift clutch (K2) and the third, fifth and ninth engaging elements (C, E, I), and wherein the seventh forward ratio is realized by closing the first powershift clutch (K1) and the second, third and ninth engaging elements (B, C, I), wherein the eighth forward ratio, which serves as a supporting gear, is realized by closing the second powershift clutch (K2) and the tenth engaging element (J), whereby the range transmission (11) is bypassed, is not situated in the power flow, and can be switched to "high" by closing the eighth engaging element (H), and wherein the forward ratios 9 to 15 are engaged analogously to the forward ratios 1-7, with the eighth engaging element (H) being closed instead of the ninth engaging element (I), wherein the first reverse ratio is realized by closing the first powershift clutch (K1) and the first, fifth, seventh and ninth engaging elements (A, E, G, I), the second reverse ratio is realized by closing the second powershift clutch (K2) and the fifth, seventh and ninth engaging elements (E, G, I), and wherein the third reverse ratio is realized by closing the first powershift clutch (K1) and the second, fifth, seventh and ninth engaging elements (B, E, G, I), wherein the reverse ratios 4-6 are realized analogously to the reverse ratios 1-3, with the difference that the range transmission (11) is switched to "high", such that the eighth engaging element (H) is closed instead of the ninth engaging element (I), wherein the eighth engaging element (H) is replaced by the thirteenth engaging element (N), the ninth engaging element (I) is replaced by the twelfth engaging element (M) and the tenth engaging element (J) is replaced by the fourteenth engaging element (K).

## Revendications

1. Boîte de vitesses à double embrayage (9, 31, 32) et à arbres de renvoi, comprenant une boîte de vitesses principale (10) et une boîte de vitesses à groupe-relais (11) montée en aval de la boîte de vitesses principale (10), dans laquelle la boîte de vitesses principale (10) présente un premier arbre d'entrée de boîte de vitesses (EW1) relié au côté de sortie d'un premier embrayage sous charge (K1) et formé par un arbre plein, un deuxième arbre d'entrée de boîte de vitesses (EW2) relié au côté de sortie d'un deuxième embrayage sous charge (K2) et formé par un arbre creux, à travers lequel le premier arbre d'entrée de boîte de vitesses (EW1) est mené, deux arbres de renvoi (VW1, VW2) disposés de façon coaxiale l'un à l'autre, dans laquelle le premier arbre de renvoi (VW1) est formé par un arbre creux et le deuxième arbre de renvoi (VW2) est mené à travers le premier arbre de renvoi (VW1), et un arbre de sortie (AB1) disposé de façon coaxiale aux deux arbres d'entrée de boîte de vitesses (EW1, EW2), qui forme l'arbre primaire de la boîte de vitesses à groupe-relais (11), dans laquelle les embrayages sous charge (K1, K2) sont reliés côté entraînement à un groupe d'entraînement, dans laquelle un premier pignon fixe (12) est disposé sur le deuxième arbre d'entrée de boîte de vitesses (EW2) et engrène avec un deuxième pignon fixe (13) sur le deuxième arbre de renvoi (VW2), dans laquelle un premier pignon libre (14) commutable au moyen d'un premier élément de commutation emboîté (2) et un deuxième pignon libre (15) commutable au moyen d'un deuxième élément de commutation emboîté (B) sont disposés sur le premier arbre d'entrée de boîte de vitesses (EW1), et engrènent respectivement avec un troisième (16) et avec un quatrième (17) pignons fixes sur le premier arbre de renvoi (VW1), dans laquelle le deuxième pignon libre commutable (15) peut être relié de façon séparable et calée en rotation au choix au moyen du deuxième élément de commutation emboîté (B) au premier arbre d'entrée de boîte de vitesses (EW1) ou au moyen d'un troisième élément de commutation emboîté (C) à l'arbre de sortie (AB1) de la boîte de vitesses principale (10), dans laquelle un troisième pignon libre (18) commutable au moyen d'un quatrième élément de commutation emboîté (D) est disposé sur l'arbre de sortie (AB1) de la boîte de vitesses principale (10) et engrène avec un cinquième pignon fixe (19) disposé sur le premier arbre de renvoi (VW1), dans laquelle le premier arbre de renvoi (VW1) peut être relié de façon séparable et calée en rotation au moyen d'un cinquième élément de commutation emboîté (E) au deuxième arbre de renvoi (VW2) et un sixième pignon fixe (20) est disposé sur l'arbre de sortie (AB1) de la boîte de vitesses principale (10) et engrène avec un quatrième pignon libre (21) disposé sur le deuxième arbre de renvoi (VW2) et commutable au moyen d'un sixième élément de commutation emboîté (F), dans laquelle pour la réalisation des rapports de marche arrière et pour la formation du plan des pignons de marche arrière (6) un cinquième pignon libre (22) commutable au moyen d'un septième élément de commutation emboîté (G) est disposé sur l'arbre de sortie (AB1) de la boîte de vitesses principale (10) et engrène avec un pignon intermédiaire (23) d'un arbre intermédiaire (24), qui engrène avec un septième pignon fixe (25) disposé sur le deuxième arbre de renvoi (VW2) pour l'inversion du nombre de tours, et dans laquelle pour contourner la boîte de vitesses à groupe-relais (11) le deuxième arbre de renvoi (VW2) peut être relié de façon séparable au moyen d'un élément de commutation (J, K) à la sortie (AB2) de la boîte de vitesses à groupe-relais (11) et dans laquelle la boîte de vitesses à groupe-relais (11) est réalisée sous la forme d'une boîte de vitesses à arbres de renvoi, comprenant un troisième et un quatrième arbres de renvoi (VW3, VW4), dans laquelle l'arbre de sortie (AB1) de la boîte de vitesses principale (10), considéré dans la direction du flux de force en mode de traction vers le plan des pignons (6) de marche arrière, présente un septième pignon libre commutable (33), qui engrène avec un neuvième pignon fixe (34) du quatrième arbre de renvoi (VW4) et un onzième pignon fixe (36) du troisième arbre de renvoi (VW3) et qui peut être relié de façon séparable au moyen d'un douzième élément de commutation emboîté (M) à l'arbre de sortie (AB1) de la boîte de vitesses principale (10), et présente un huitième pignon libre commutable (35), qui engrène avec un dixième pignon fixe (37) du quatrième arbre de renvoi (VW4) et avec un douzième pignon fixe (38) du troisième arbre de renvoi (VW3) et peut être relié de façon séparable au moyen d'un treizième élément de commutation emboîté (N) à l'arbre de sortie (AB1) de la boîte de vitesses principale (10), dans laquelle le huitième pignon libre (35) forme la sortie (AB2) de la boîte de vitesses (32) et dans laquelle le troisième arbre de renvoi (VW3) peut être relié de façon séparable au moyen d'un quatorzième élément de commutation (K) au deuxième arbre de renvoi (VW2).

2. Boîte de vitesses à double embrayage (9, 31, 32) et à arbres de renvoi selon la revendication 1, **caractérisée en ce qu'**elle présente quinze rapports de marche avant commutables sous charge et six rapports de marche arrière commutables sous charge, dans laquelle le premier rapport de marche avant s'obtient par la fermeture du premier embrayage sous charge (K1) et des premier, quatrième et neuvième éléments de commutation (A, D et I), le deuxième rapport de marche avant s'obtient par la fermeture du deuxième embrayage sous charge (K2) et des quatrième, cinquième et neuvième éléments de commutation (D, E, I), le troisième rapport de marche avant s'obtient par la fermeture du premier embrayage sous charge (K1) et des deuxième, quatrième et neuvième éléments de commutation (B, D, I), le quatrième rapport de marche avant s'obtient par la fermeture du deuxième embrayage sous charge (K2) et des sixième et neuvième éléments de commutation (F, I), le cinquième rapport de marche avant s'obtient par la fermeture du premier embrayage sous charge (K1) et des premier, troisième et neuvième éléments de commutation (A, C, I), le sixième rapport de marche avant s'obtient par la fermeture du deuxième embrayage sous charge (K2) et des troisième, cinquième et neuvième éléments de commutation (C, E, I), et dans laquelle le septième rapport de marche avant s'obtient par la fermeture du premier embrayage sous charge (K1) et des deuxième, troisième et neuvième éléments de commutation (B, C, I), dans laquelle le huitième rapport de marche avant servant de rapport de support s'obtient par la fermeture du deuxième embrayage sous charge (K2) et du dixième élément de commutation (J), grâce à quoi la boîte de vitesses à groupe-relais (11) est contournée, ne se trouve pas dans le flux de puissance et peut être commutée sur "haut" par la fermeture du huitième élément de commutation (H), et dans laquelle les rapports de marche avant 9 à 15 sont commutés de façon analogue aux rapports de marche avant 1 à 7, dans lesquels le huitième élément de commutation (H) est fermé au lieu du neuvième élément de commutation (I), dans laquelle le premier rapport de marche arrière s'obtient par la fermeture du premier embrayage sous charge (K1) et des premier, cinquième, septième et neuvième éléments de commutation (A, E, G, I), le deuxième rapport de marche arrière s'obtient par la fermeture du deuxième embrayage sous charge (K2) et des cinquième, sixième et neuvième éléments de commutation (E, G, I) et dans laquelle le troisième rapport de marche arrière s'obtient par la fermeture du premier embrayage sous charge (K1) et des deuxième, cinquième, septième et neuvième éléments de commutation (B, E, G, I), dans laquelle les rapports de marche arrière 4 à 6 s'obtiennent de façon analogue aux rapports de marche arrière 1 à 3, avec la différence que la boîte de vitesses à groupe-relais (11) est commutée sur "haut", de telle manière que le huitième élément de commutation (H) soit fermé au lieu du neuvième élément de commutation (I), dans laquelle, le huitième élément de commutation (H) est remplacé par le treizième élément de commutation (N), le neuvième élément de commutation (I) est remplacé par le douzième élément de commutation (M) et le dixième élément de commutation (J) est remplacé par le quatorzième élément de commutation (K).
